# EUROPEAN PATENT APPLICATION

(11) **EP 1 988 703 A1**
(43) Date of publication of application: **05.11.2008**
(21) Application number: 07251845.9
(22) Date of filing: 02.05.2007
(51) Int. Cl.: H04N 1/64

(54) **Image transformation**

(71) Applicant: TTPCOM Limited, Royston, Hertfordshire, SG8 6HQ (GB)
(72) Inventor: Malewski, Rafal, 9220 Aalborg Oest (DK)
(74) Representative: Gillard, Matthew Paul

(57) **Abstract**

A method of decoding an encoded image represented by a plurality of data chunks (12; 30; 40; 50; 60; 70; 80), the method comprising retrieving a run length indicator (34; 44; 54; 64; 74; 86) and a colour signifier (32; 42; 52; 62; 72; 82) from a data chunk (12; 30; 40; 50; 60; 70; 80) and adding to a pixel map a run of pixels of a colour value determined by the colour signifier (32; 42; 52; 62, 72; 82) and of a length indicated by the run length indicator (34; 44; 54; 64; 74; 86), characterised in that the colour signifier (32; 42; 52; 62; 72; 82) comprises an index to a look-up table (14) containing information relating to a palette of colour values used in the image.

## Description

The present invention relates to methods, apparatus and programs for decoding and encoding an image, to a method of displaying an encoded image and to a file format for images.

Mobile telephones today have a high level of functionality. The human, or user, interface (hereinafter referred to as the "UI") of a mobile telephone has to make it easy for a user to find and control all of the telephone's functions, and it has become common to use rich colour graphic displays. Often the UI uses "icons", which are small graphics elements representing a function to be controlled, such as a stylised picture of a camera. The function can be selected by moving a cursor to highlight the icon and then pressing a "select" key to enable the function. Storing a wide range of icons, and possibly other graphics elements such as background "wallpaper", all in colour, can require a significant amount of memory in the telephone. Non-volatile memory is needed to store the basic data when the telephone is switched off, and RAM (Random Access Memory) will also be required to store the actual images being displayed while the telephone is being used. Minimising the amount of both non-volatile memory and RAM in a mobile telephone is very desirable to minimise the cost of the telephone and its power consumption.

According to one aspect of the present invention, there is provided a method of decoding an encoded image represented by a plurality of data chunks, the method comprising retrieving a run length indicator and a colour signifier from a data chunk and adding to a pixel map a run of pixels of a colour value determined by the colour signifier and of a length indicated by the run length indicator, characterised in that the colour signifier comprises an index to a look-up table containing information relating to a palette of colour values used in the image.

This method of decoding an encoded image allows the image to be decoded quickly and efficiently, and helps to reduce the processing and memory requirements of a device or system that is required to decode such images, for example a mobile telephone having a display on which icons representing functions to be controlled are displayed.

According to a further aspect of the invention, there is provided a method of encoding an image wherein each pixel of the image has a colour value selected from a palette containing a plurality of colour values, the method comprising identifying runs of pixels having the same colour value, recording the length of each such run and associating the recorded length of each run with a colour signifier indicative of the colour value of the pixels in the run to form a plurality of data chunks, characterised in that the colour signifier comprises an index to a look-up table containing information relating to the colour palette.

This encoding method reduces the amount of memory required to store images, whilst remaining adaptable, to allow images with a limited colour range to be stored and represented efficiently, as well as images with a larger colour range.

The look-up table may contain the palette of colour values, each colour value being associated with an index.

Alternatively, the look-up table may contain indices to a further look-up table containing a palette of colour values common to a plurality of images.

Preferably, each of the data chunks comprises an integer number of bytes.

The length of the data chunks may be fixed.

Alternatively, the data chunks may be variable in length.

Where the data chunks are variable in length, a byte of the data chunks may contain a flag to indicate that another byte contains information relating to the length of a run of pixels.

The flag may comprise a predetermined sequence of bits.

According to a further aspect of the invention, there is provided a method of displaying an encoded image on a display device, the method comprising retrieving the encoded image from a memory, decoding the encoded image using the decoding method described above and displaying the decoded image on the display device.

This method permits fast and efficient decoding and display of the image, whilst reducing the memory and processing requirements for doing so, as the image can be decoded only when it is required, rather than being stored in a more memory-intensive unencoded form.

The decoded image may be stored in a temporary display buffer and the contents of the temporary display buffer may be written to the display device to display the image.

According to a further aspect of the invention, there is provided an apparatus for decoding an encoded image represented by a plurality of data chunks comprising processing means configured to perform the decoding method described in the preceding paragraphs.

The image may comprise an icon which can be displayed on a display device.

According to a further aspect of the invention there is provided a mobile telephone comprising a decoding apparatus according to the preceding paragraphs.

According to a further aspect of the invention there is provided an apparatus for encoding an image wherein each pixel of the image has a colour value selected from a palette containing a plurality of colour values, the apparatus comprising processing means configured to carry out the encoding method described in the preceding paragraphs.

According to a further aspect of the invention there is provided a method of decoding an image represented by a plurality of data chunks, the method comprising retrieving a colour signifier and a flag from a first part of a data chunk, analysing the flag and, if the flag indicates that the data chunk is a variable-length data chunk, retrieving a run length indicator from a second part of the data chunk and adding to a pixel map a run of pixels of a colour value determined by the colour signifier and of a length indicated by the run length indicator.

According to a further aspect of the invention, there is provided a file format for images comprising a plurality of data chunks, each chunk comprising a colour signifier and a run length indicator, characterised in that the colour signifier comprises an index to a look-up table containing information relating to a palette of colour values used by the image.

Such a file format reduces the amount of memory required to store an image, whilst permitting the image to be reproduced with complete accuracy on decoding.

The look-up table may be included in the file.

The look-up table may contain the palette of colours.

Alternatively, the look-up table may contains indices to a further look-up table containing a palette of colours common to a plurality of images.

The data chunks of the file format may comprise any of the features recited in the preceding paragraphs in relation to the decoding and encoding methods.

The file format may further comprise a header which includes information on whether the data chunks are each of a fixed length or are of variable length.

The file format may store an image in a form which is immediately usable by a display device on decoding

According to a further aspect of the invention, there is provided a program for causing processing means to carry out the decoding or encoding method described in the preceding paragraphs.

A preferred embodiment of the invention will now be described, strictly by way of example only, with reference to the accompanying drawings, of which
FIGURE 1 is a schematic representation of a data file format according to an aspect of the present invention;
FIGURE 2 is a schematic representation of a system for producing an encoded image;
FIGURE 3 is a schematic representation of formats for fixed-length data chunks which can be decoded using the method of the invention;
FIGURE 4 is a schematic representation of a format for variable-length data chunks; and
FIGURE 5 is a schematic representation of a system for decoding and displaying an encoded image.

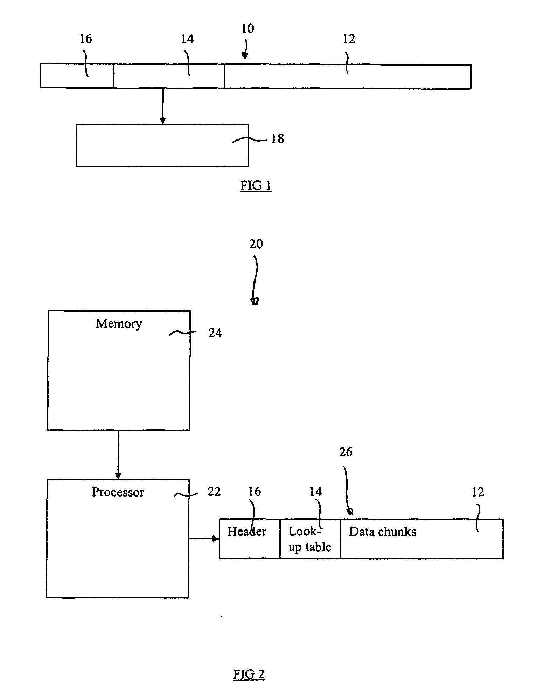

Referring firstly to Figure 1, a data file format for encoding images is shown generally at 10. This data file format 10 can be used to encode graphics elements such as icons which can be displayed by a device such as a mobile telephone. In this file format the graphics elements can be encoded in a format which can be used directly by the display device without requiring any additional processing such as pixel-format conversions, or additional system elements such as intermediate memory buffers. This permits rapid decoding of an encoded image.

Typically, such graphics elements are designed and stored in an external device such as a PC as pixel maps. For example, an icon could be represented as an N column by M row matrix of colour values, with each colour value in the matrix representing to the colour of a corresponding pixel of icon. Each colour value may be represented, for example, by three bytes, where one byte represents the brightness of the red (R) component of the colour of the pixel, one byte represents the brightness of the green (G) component of the colour and one byte represents the brightness of the blue (B) component. Thus, each pixel of the icon could in principle have a colour chosen from a palette of 2²⁴ shades. An icon may typically be 64 x 64 pixels in size, so 12288 bytes of memory may be required to store a single icon in an uncompressed form. Some reduction in this is possible because the number of colours that can be rendered on a display of a mobile telephone may be much smaller than the theoretical number of shades in the palette. Typically, such a display is able to render 65536 colours, requiring only two bytes per pixel rather than three, but 8192 bytes are still needed to store a single uncompressed icon. Given that a large number of icons may be used in a complex UI design, it is clear that a significant amount of memory is required to store all of the icons in an uncompressed form.

Icons tend to be stylised pictures which are characterised by areas of a single shade with abrupt boundaries, rather than smoothly varying tone (which is more characteristic of a photographic image). Such images can be efficiently represented by run length encoding. In this method, a row of the matrix of the pixel map of the image containing N pixels is represented as n₁ pixels of a common shade 1, n₂ pixels of a common shade 2, n₃ pixels of a common shade 3 and so on, where n₁ + n₂ + n₃ + ... = N.

In the example above, where N = 64, storing a typical run of n pixels of the same colour included in the N-pixel row of the pixel map (where n<N) requires 3 bytes of memory: 2 bytes to store the colour value common to all of the pixels in the run (if each colour value in the palette is represented by two bytes), and one byte to represent the number of pixels in the run. In contrast, 2n bytes of memory would be required to store the same run of pixels using a scheme in which each pixel is represented by an individual colour value. Thus, it is clear that a run-length encoding scheme allows a typical run of perhaps only a few pixels to be represented by a smaller number of bytes than would be necessary if each pixel were represented by an individual colour value.

A typical icon uses only a small range of colours out of the maximum possible range, and further efficiency can be obtained by storing the colour values of only the colours required by a particular icon in a look-up table, and associating with each run length number (n₁, n₂, n₃ ...) a pointer or index to the entry in the look-up table containing the colour value of the required colour. Further efficiency may be obtained in some cases by storing not the colour value in the look-up table but a pointer or index to another look-up table containing colour values which are common to a plurality of icons. Such a look-up table defines a colour "palette".

Thus, to encode an image such as an icon, it is first necessary to identify runs of pixels in the uncompressed image having the same colour value. Such runs might, for example, be made up of consecutive pixels in a row. The number of pixels in the run (the run length) is counted, and this value is used to define a run length indicator, which is associated with a colour signifier indicative of the colour of the pixels in the run. The colour signifier is an index which denotes the entry in a look-up table, containing all of the colours used in the image, containing the colour value of the pixels in the run. Alternatively, where a plurality of images which use a common palette of colours are to be encoded, the colour signifier may be an index to a look-up table containing indices to a further look-up table containing the colour values of all of the colours in the common palette.

The run length indicator and its associated colour signifier form a data chunk 12, which is preferably an integer number of bytes in length. The encoding process is repeated for the whole image, and the data chunks 12 so produced are stored sequentially as part of a file, in the format shown in Figure 1. The format of the data chunks 12 is discussed in detail below.

As well as the data chunks 12 representing the image, the file also includes a look-up table 14 and a header 16. As explained above, the look-up table 14 contains the colour values (i.e. the colour palette) of the pixels in the image. Alternatively, if a plurality of images which use a common colour palette are to be encoded, the look-up table 14 contains indices to a further, external, look-up table 18 containing the colour values of all of the colours in the common palette.

The header 16 consists of two parts. The first part is a generic header containing information such as a version number, pixel colour format and image size (rows x columns of pixels, for example), the type of data chunks 12 used, and whether the look-up table 14 contained in the file is itself a colour palette or contains pointers or indices to an external look-up table 18 containing a common colour palette. The second part is a compression header, which contains information on a version ID, the size of one item in the look-up table 14, the number of items in the look-up table 14, and the number of data chunks in the file.

An apparatus for encoding an image using the method described above is shown generally at 20 in Figure 2, and comprises a processor 22 which is associated with a memory 24 in which the unencoded image is stored. The processor 22 retrieves the unencoded image from the memory 24 and performs the method described above to produce the data chunks 12. A header 16 is generated by the processor 22 from the data chunks 12 and predefined configuration information, and the look-up table 14 and the data chunks 12 are appended to the header 16 to produce a file 26.

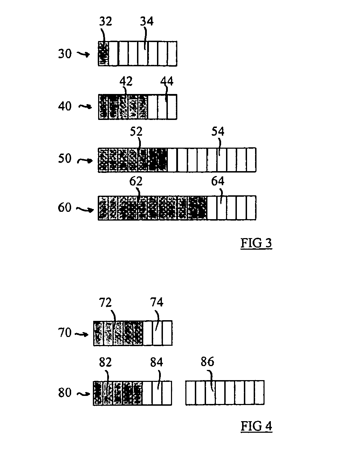

Figure 3 illustrates typical formats used for the data chunks 12. Each data chunk 12 is preferably fitted into a small integer number of 8-bit bytes, which can be efficiently handled by an ordinary microprocessor.

In each data chunk 12, a first set of bits is used as the colour signifier, followed by a second set of bits which constitutes the run length indicator, giving the length in pixels, of the colour identified by the colour signifier. A range of data chunk 12 types may be defined for a given encoding scheme, which allows a chunk type which is optimum for a particular image to be found.

For example, the one-byte chunk type shown generally at 30 is appropriate for a monochrome image, as only the first bit 32 is allowed for colour, and run lengths of up to 128 are permissible, as the second set of bits 34 contains seven bits. Note that a run length must be at least one, and a run length of n is indicated by a run length indicator value of (n-1).

Chunk type 40 is also one byte long, but five bits are allocated to the colour signifier 42, representing a colour palette containing 32 colours, and three bits are allocated to the run length indicator 44, giving a maximum run length of eight pixels.

Chunk type 50 is two bytes long, having seven bits allocated to the colour signifier 52 (representing a colour palette containing 128 colours) and nine bits for the run length indicator 54, permitting run lengths of up to 512 pixels.

Chunk type 60 is also two bytes long, and has 11 bits allocated to the colour signifier 62, allowing a colour palette of up to 2048 colours, and five bits allocated to the run length indicator 64, permitting run lengths of up to 32 pixels. This concept may be extended so that longer chunks 12 of three or more bytes can be used, where appropriate, but for the usual size of an icon used in the UI of a mobile telephone this is unnecessary. Moreover, it will be understood that it may be more efficient to use two or more adjacent short data chunks 12 having the same colour indicator to encode a longer run that occurs seldom in a given image rather than using a longer data chunk 12 that would be longer than necessary to encode most of the other runs in the image.

Alternatively or additionally, the data chunks 12 may be extensible, as illustrated in Figure 4. This can be achieved by using, in a first byte of the data chunk 12, a flag to indicate that a second byte indicating the run length follows the first byte. The flag may be a predetermined sequence of bits occupying the bits allocated to the run-length indicator, for example.

In one embodiment of such a scheme, a run-length indicator with a value of zero (the "all-zero" run-length indicator) signifies that a second byte is used to indicate a run length of up to 256 pixels. In this scheme, the run length in the first byte is indicated by the actual number, m, represented by the run length indicator bits, or in the second byte, if used, as m+1. Thus, in the chunk illustrated generally at 70, the colour signifier 72 contains five bits, indicating a palette of up to 32 colours, and the run length indicator 74 contains three bits, indicating a maximum run length of seven pixels. In the chunk type illustrated generally at 80, the colour signifier 82 again contains five bits, signifying a colour palette containing up to 32 colours, and the final three bits 84 of the first byte are all set to zero, to indicate that the second byte contains the run length indicator 86, indicating a run length of up to 256 pixels.

Once an image has been encoded using the method described above, the encoded image can be stored. For example, where the image is an icon for display on a screen of a mobile telephone, the encoded image can be stored in non-volatile memory of the mobile telephone. Of course, it will be appreciated that encoded images can be stored on any convenient medium, for example a hard disk or a compact disc.

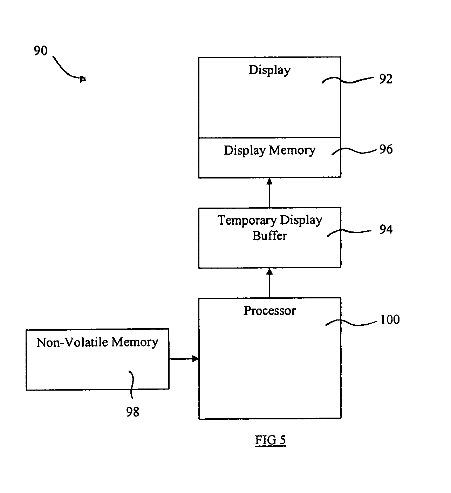

Turning now to Figure 5, a system for decoding and displaying encoded images is shown generally at 90. The system 90 may, for example, form part of a mobile telephone. The system includes a display 92 on which graphics elements such as icons which form part of a UI of the mobile telephone can be displayed. In this example, a temporary display buffer 94 is used to store a pixel map of the display 92, with this pixel map being written to a display memory 96 associated with the display 92 when the display 92 is to be refreshed, thus to change the display 92.

As part of the UI of the mobile telephone, graphics elements such as icons may be displayed on the display 92. A non-volatile memory 98 is provided in which such graphics elements are stored in the encoded format described above. The encoded graphics elements are stored in this non-volatile memory 98 so as to be available when required, without having to be loaded into RAM, for example.

When a graphics element is required, the appropriate encoded image file is retrieved from the non-volatile memory 98 and decoded by a processor 100, as follows. The processor 100 reads the header of the encoded image file to determine the dimensions of the image to be decoded, the format of the data chunks and other relevant information. The processor 100 then retrieves the run length indicator and the colour signifier from each of the data chunks 12 in turn. For each data chunk, a run of pixels of a length indicated by the run length indicator and having the colour indicated by the colour signifier is added to a pixel map. To select the colour of the run of pixels added to the pixel map, the colour signifier is used to index the look-up table contained within the encoded image file, which provides either the required colour value or an index to a further look-up table containing a common palette of colour values used by a plurality of images.

This process is repeated for all of the data chunks 12 contained in the encoded image file, until the pixel map contains an image having the dimensions specified in the header of the encoded image file. The completed pixel map is stored in a temporary display buffer 94 until the display 92 requires refreshing, at which point the contents of the temporary display buffer are written to a display memory 96 of the display 92, and are thus displayed on the display 92.

It will be appreciated that, by virtue of the file format used for the encoded graphics element, the graphics element can be stored in a form which can immediately be used by the display 92, without requiring any additional processing such as pixel-format conversion. Furthermore, no additional system elements, such as intermediate memory buffers, are required. This permits the image to be decoded and displayed very quickly, whilst minimising use of the mobile telephone's memory and processing resources.

Although the invention has been described herein in relation to displaying a graphics image such as an icon on a display of a mobile telephone, it will be apparent to those skilled in the art that the methods, apparatus, programs and file format of the invention are equally applicable to other fields.

## Claims

1. A method of decoding an encoded image represented by a plurality of data chunks (12; 30; 40; 50; 60; 70; 80), the method comprising:
retrieving a run length indicator (34; 44; 54; 64; 74; 86) and a colour signifier (32; 42; 52; 62; 72; 82) from a data chunk (12; 30; 40; 50; 60; 70; 80) and
adding to a pixel map a run of pixels of a colour value determined by the colour signifier (32; 42; 52; 62; 72; 82) and of a length indicated by the run length indicator (34; 44; 54; 64; 74; 86),
**characterised in that** the colour signifier (32; 42; 52; 62; 72; 82) comprises an index to a look-up table (14) containing information relating to a palette of colour values used in the image.

2. A method of encoding an image wherein each pixel of the image has a colour value selected from a palette containing a plurality of colour values, the method comprising:
identifying runs of pixels having the same colour value;
recording the length of each such run; and
associating the recorded length of each run with a colour signifier (32; 42; 52; 62; 72; 82) indicative of the colour value of the pixels in the run to form a plurality of data chunks (12; 30; 40; 50; 60; 70; 80),
**characterised in that** the colour signifier (32; 42; 52; 62; 72; 82) comprises an index to a look-up table (14) containing information relating to the colour palette.

3. A method according to claim 1 or claim 2 wherein the look-up table (14) contains the palette of colour values, each colour value being associated with an index.

4. A method according to any of the preceding claims wherein the look-up table (14) contains indices to a further look-up table (18) containing a palette of colour values common to a plurality of images.

5. A method according to any of the preceding claims wherein each of the data chunks (12; 30; 40; 50; 60; 70; 80) comprises an integer number of bytes.

6. A method according to any of the preceding claims wherein the length of the data chunks (12; 30; 40; 50; 60; 70; 80) is fixed.

7. A method according to any of claims 1 - 5 wherein the data chunks (12; 30; 40; 50; 60; 70; 80) are variable in length.

8. A method according to claim 7 wherein part of a data chunk (12; 30; 40; 50; 60; 70; 80) contains a flag (84) to indicate that another part of the data chunk (12; 30; 40; 50; 60; 70; 80) contains information relating to the length of a run of pixels.

9. A method according to claim 8 wherein the flag comprises a predetermined sequence of bits.

10. A method of displaying an encoded image on a display device (92), the method comprising:
retrieving the encoded image from a memory;
decoding the encoded image using the method of claim 1; and
displaying the decoded image on the display device (92).

11. A method according to claim 10 wherein the decoded image is stored in a temporary display buffer (94) and the contents of the temporary display buffer (94) are written to the display device (92) to display the image.

12. An apparatus for decoding an encoded image represented by a plurality of data chunks (12; 30; 40; 50; 60; 70; 80), the apparatus comprising processing means (100) configured to perform the method of claim 1 or claims 3 - 9, where dependent upon claim 1.

13. An apparatus according to claim 12 wherein the image comprises an icon which can be displayed on a display device (92).

14. A mobile telephone comprising an apparatus according to claim 12 or claim 13.

15. An apparatus for encoding an image wherein each pixel of the image has a colour value selected from a palette containing a plurality of colour values, the apparatus comprising processing means (22) configured to carry out the method of any of claims 2 - 9.

16. A method of decoding an image represented by a plurality of data chunks (80), the method comprising:
retrieving a colour signifier (82) and a flag (84) from a first part of a data chunk (80);
analysing the flag (84) and, if the flag indicates that the data chunk (80) is a variable-length data chunk, retrieving a run length indicator (86) from a second part of the data chunk; and
adding to a pixel map a run of pixels of a colour value determined by the colour signifier (82) and of a length indicated by the run length indicator (86).

17. A file format (10) for images, the file format comprising a plurality of data chunks (12; 30; 40; 50; 60; 70; 80), each chunk (12; 30; 40; 50; 60; 70; 80) comprising a colour signifier (32; 42; 52; 62; 72; 82) and a run length indicator (34; 44; 54; 64; 74; 84), **characterised in that** the colour signifier (32; 42; 52; 62; 72; 82) comprises an index to a look-up table (14) containing information relating to a palette of colour values used by the image.

18. A file format according (10) to claim 17 wherein the look-up table (14) is included in the file.

19. A file format (10) according to claim 17 wherein the look-up table (14) contains the palette of colours.

20. A file format (10) according to claim 18 wherein the look-up table (14) contains indices to a further look-up table (18) containing a palette of colours common to a plurality of images.

21. A file format (10) according to any of claims 17 - 20 wherein the data chunks (12; 30; 40; 50; 60; 70; 80) comprise the features recited in any of claims 5 - 10.

22. A file format (10) according to claim 21 further comprising a header (16) which includes information on whether a data chunk (12; 30; 40; 50; 60; 70; 80) is of a fixed length or is of variable length.

23. A file format (10) according to any of claims 17 - 21 wherein an image is stored in a form which is immediately usable by a display device on decoding.

24. A program for causing processing means (22, 100) to carry out the method of any of claims 1-10.
